Europäisches Patentamt

European Patent Office

Office européen des brevets

(19)

(11) EP 0 487 006 B1

(12) EUROPEAN PATENT SPECIFICATION

(45) Date of publication and mention
of the grant of the patent:
18.06.1997 Bulletin 1997/25

(51) Int Cl.6: **C08K 3/36**, C08L 51/04,
C08F 6/14

(21) Application number: 91119665.7

(22) Date of filing: 18.11.1991

(54) **Method for improving powder characteristics**

Verfahren zur Verbesserung von Pulvercharakteristika

Méthode pour améliorer les caractéristiques d'une poudre

(84) Designated Contracting States:
BE DE FR GB NL

(30) Priority: 20.11.1990 JP 315560/90
20.11.1990 JP 315561/90

(43) Date of publication of application:
27.05.1992 Bulletin 1992/22

(73) Proprietor: MITSUBISHI RAYON CO., LTD.
Tokyo 104 (JP)

(72) Inventors:
• Yamamoto, Naoki,
c/o Central Research Laboratories
Otake-shi, Hiroshima 739-06 (JP)
• Yanagase, Akira,
c/o Central Research Laboratories
Otake-shi, Hiroshima 739-06 (JP)
• Iwasaki, Tadashi, c/o Central Res. Laboratories
Otake-shi, Hiroshima 739-06 (JP)
• Itoh, Masakazu,
c/o Central Research Laboratories
Otake-shi, Hiroshima 739-06 (JP)

(74) Representative:
TER MEER STEINMEISTER & PARTNER GbR
Mauerkircherstrasse 45
81679 München (DE)

(56) References cited:
EP-A- 0 035 108        EP-A- 0 035 108
EP-A- 0 272 812        EP-A- 0 369 376

**Description**

BACKGROUND OF THE INVENTION

FIELD OF THE INVENTION

The present invention relates to a method for improving the powder characteristics of graft copolymers comprising rubber as the core. More particularly, the invention relates to a method for improving powder characteristics which comprises adding specific fine powder to a graft copolymer comprising rubber as the core to ameliorate the tackiness inherent to such a copolymer and thereby to obtain copolymer powders having excellent powder characteristics.

DESCRIPTION OF RELATED ART

Since graft copolymers comprising rubber as the core are tacky in nature, they offer handling problems in that they are apt to stay in dryers when dried in fluidized bed dryers or flash dryers, are liable to block outlet ports and are difficultly taken out when stored in bunkers.

Various methods have been proposed to improve such powder characteristics of the graft copolymers comprising rubber as the core. For example, JP-A-1-26663 discloses a method of improving the powder characteristics of graft copolymers by adding metal oxides, chlorides. hydrochlorides, carbonates or sulfates to the copolymers. US-A-4,918,118 discloses a method of improving powder characteristics by addition of lubricants.

EP-A-0 272 812 discloses a process for partially curing a powdery polyarylene sulfide resin which comprises the steps of adding to the resin at least one additive selected from the group consisting of silica, hydrophobic silica, talc, calcium carbonate and mixtures thereof and then curing the resin at temperatures in the range of a temperature just below the melting point of the resin down to a temperature lower by 80°C than said melting point. Said additive is used to prevent a degradation of the powder characteristics of the polymer during and after the curing treatment.

However, these prior art methods are not capable of sufficiently ameliorating the above-mentioned handling problems due to the tackiness of graft copolymers comprising rubber as the core and of imparting powder characteristics required in transportation, weighing, storage and other handlings of powders.

SUMMARY OF THE INVENTION

The present inventors have made extensive studies to develop a method for improving the powder characteristics of graft copolymers comprising rubber as the core while maintaining other properties of the copolymer. As the result, the present inventors have found that the powder characteristics can be greatly improved by addition of specific powder. Thus, the present invention has been completed.

According to the present invention, there is provided the use of hydrophobic microparticles of silica which consists of silicon dioxide obtained by combustion hydrolysis or the aggregate thereof and has an average particle diameter of 0.001 µm to 1 µm and in which the number of silanol groups present on the surface of the microparticles of silica is 2 or less per 10 nm square (100Å square) for improving the powder characteristics of a powder obtained by coagulation of a latex of a graft copolymer comprising rubber as the core by adding 0.05-10 parts by weight of said microparticles to 100 parts by weight of said powder.

According to the present invention, the blocking property of graft copolymers comprising, as the core, rubber such as butadiene based rubber graft copolymers and polyorganosiloxane rubber graft copolymers can be improved and blocking phenomena can be prevented in storage and transportation of polymer powders.

PREFERRED EMBODIMENTS OF THE INVENTION

The graft copolymer comprising rubber as the core used in the present invention may be obtained by preparing rubber which is to form the core by the conventional emulsion polymerization and then graft-copolymerizing a copolymerizable monomer by the conventional emulsion polymerization.

Examples of the monomer which may be used to form the rubber that will constitute the core polymer include diene monomers such as butadiene, isoprene, or chloroprene, alkyl acrylate monomers such as butyl acrylate or ethyl acrylate, and organosiloxanes such as hexamethylcyclotrisiloxane, or octamethylcyclotetrasiloxane.

As a crosslinking agent, there may be used, e.g. divinylbenzene, ethylene glycol dimethacrylate or 1,3-butylene glycol dimethacrylate. Further, a graft-linking agent may also be preferably used. The "graft-linking agent" refers to a monomer having both a functional group which is to be polymerized together at the time of preparation of rubber by polymerization to be incorporated into the rubber structure and a functional group which is to remain unreacted at the time of preparation of rubber by polymerization but react at the time of subsequent polymerization of monomer in the presence of rubber to graft a branch to the rubber. That is, a monomer having a plurality of polymerizable functional groups with different reactivities is referred. As examples of the graft-linking agent, there may be mentioned allyl methacrylate, triallyl cyanurate, triallyl isocyanurate, or methacryloyloxysiloxane. Allyl methacrylate may be used also as the crosslinking agent.

As examples of the vinyl monomer to be graft-polymerized to the polymer comprising rubber as the core, there may be mentioned various vinyl monomers, for example, aromatic alkenyl compounds such as styrene, $\alpha$-methylstyrene or vinyltoluene; methacrylates such as methyl methacrylate or 2-ethylhexyl methacrylate; acrylates such as methyl acrylate, ethyl acrylate or butyl acrylate; organic acids such as acrylic acid or methacrylic acid; epoxy group-containing esters such as glycidyl methacrylate; and vinyl cyanicle compounds such as acrylonitrile or methacrylonitrile. These monomers may be used each alone or in a combination of two or more thereof.

As the graft copolymer comprising rubber as the core used in the present invention, there may be mentioned, for example, butadiene based rubber graft copolymers which use polybutadiene based rubbers and polyorganosiloxane rubber graft copolymers which use polyorganosiloxane based rubbers, the latter being particularly preferable.

The polybutadiene based rubber in the polybutadiene based rubber graft copolymer used in the present invention may be obtained by emulsion-polymerizing 50-100 parts by weight of butadiene, 0-50 parts by weight of styrene and 0-20 parts by weight of a copolymerizable monomer other than styrene.

The proportion of the polybutadiene based rubber and the vinyl monomer in the above polybutadiene based rubber graft copolymer is 30-95% by weight, preferably 40-90% by weight, of the rubber and 5-70% by weight, preferably 10-60% by weight, of the vinyl monomer based on the weight of the graft copolymer comprising the rubber as the core.

The polybutadiene based rubber graft copolymer preferably contains 80% by weight or more of coagulated particles having a size of 1000 μm to 100 μm and 10% by weight or less of the particles having a size of 1000 μm or more, or 100 μm or less.

The polyorganosiloxane based rubber graft copolymers used in the present invention refer to those obtained by graft-polymerizing at least one vinyl monomer to a polyorganosiloxane based rubber consisting of 1-100% by weight of a polyorganosiloxane rubber component and 99-0% by weight of an alkyl acrylate (and/or methacrylate) rubber component.

Such polyorganosiloxane based rubbers are most suitably prepared by emulsion polymerization. Preferably, a polyorganosiloxane rubber is first prepared and then a monomer for synthesizing alkyl acrylate (and/or methacrylate) rubber is polymerized. The polyorganosiloxane rubber component constituting the above polyorganosiloxane based rubber may be prepared by emulsion polymerization using an organosiloxane and a crosslinking agent for polyorganosiloxane rubber (hereinafter referred to as crosslinking agent (I)) shown below. At this time, further, a graft-linking agent for polyorganosiloxane rubber (hereinafter referred to as graft crosslinking agent (I)) may be used together. The organosiloxanes may be various cyclic organosiloxanes of 3 or more membered ring, those of 3-6 membered ring being preferably used. Examples of the cyclic organosiloxane include hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane or octaphenylcyclotetrasiloxane. They may be used each alone or as a mixture of two or more thereof. The amount thereof used is preferably 50% by weight or more, more preferably 70% by weight or more, based on the polyorganosiloxane rubber component. As the crosslinking agent (I), there may be used trialkoxysilanes or tetraalkoxysilanes. Specific examples thereof include triethoxyphenylsilane, tetramethoxysilane, tetraethoxysilane, tetra-n tetra-n-propoxysilane or tetrabutoxysilane , among which tetraalkoxysilanes are preferred and tetraethoxysilane is particularly preferable. The amount of the crosslinking agent (I) used is 0.1-30% by weight of the polyorganosiloxane rubber component.

The graft-linking agent (I) refers to a monomer having both a functional group which is to be polymerized together at the time of preparation of polyorganosiloxane rubber by polymerization to be incorporated into the rubber structure, namely an alkoxy group attached to silicon, and a functional group which does not react at the time of preparation of rubber by polymerization but reacts at the time of subsequent preparation of polyalkyl acrylate (and/or methacrylate) rubber by polymerization in the presence of the polyorganosiloxane rubber to form a graft linkage between the polyalkyl acrylate (and/or methacrylate) rubber and the polyorganosiloxane rubber, for example, C=C unsaturated groups or a mercapto group.

As the graft-linking agent (I), there may be used compounds capable of forming a unit represented by the formula

$$CH_2=CR^2\text{-COO-}(CH_2)_p\text{-}SiR^1{}_nO_{(3-n)/2} \qquad (I\text{-}1)$$

$$CH_2=CH\text{-}SiR^1{}_nO_{(3-n)/2} \qquad (I\text{-}2)$$

or

$$HS\text{-}(CH_2)_p SiR^1{}_n O_{(3\text{-}n)/2} \qquad\qquad (I\text{-}3)$$

wherein $R^1$ denotes a methyl group, ethyl group, propyl group or phenyl group, $R^2$ denotes a hydrogen atom or methyl group, n denotes 0,1 or 2, and p denotes an integer of 1 to 6. (Meth)acryloyloxysiloxanes capable of forming the unit of the formula (I-1) exhibit a high graft efficiency, hence can form effective graft chains, and have the advantage of developing good impact resistance.

Among the compounds capable of forming the unit of the formula (I-1), particularly preferred are methacryloyloxysiloxanes. Specific examples thereof include β-methacryloyloxyethyldimethoxymethylsilane, γ-methacryloyloxypropylmethoxydimethylsilane, γ-methacryloyloxypropyldimethoxymethylsilane, γ-methacryloyloxypropyltrimethoxysilane, γ-methacryloyloxypropylethoxydiethylsilane, γ-methacryloyloxypropyldiethoxymethylsilane or δ-methacryloyloxybutyldiethoxymethylsilane. The amount of the graft-linking agent (I) used is 0-10% by weight based on the polyorganosiloxane rubber component.

For the preparation of the polyorganosiloxane rubber, there may be used, for example, the methods described in US-A-2,891,920 and US-A-3,294,725. In practicing the present invention, it is preferable that the preparation is performed by subjecting a liquid mixture of an organosiloxane, a crosslinking agent (I) and optionally a graft-linking agent (I) and optionally a graft-linking agent (I) to mixing with water under shear in the presence of a sulfonic acid type emulsifier such as an alkylbenzenesulfonic acid by using, for example, a homogenizer. Alkylbenzenesulfonic acids are preferable since they act both as an emulsifier for organosiloxanes and also as a polymerization initiator. It is preferable at this time to use a metal salt of the alkylbenzenesulfonic acid in combination therewith because it is effective in keeping the polymer stable during graft polymerization.

After the organosiloxane has been polymerized, the resulting latex is neutralized with an aqueous solution of alkali such as sodium hydroxide, potassium hydroxide or sodium carbonate to terminate the polymerization.

The polyalkyl acrylate (and/or methacrylate) rubber component which constitutes the polyorganosiloxane baesd rubber may be synthesized by using an alkyl acrylate (and/or methacrylate), a crosslinking agent for polyalkyl acrylate (and/or methacrylate) rubber (hereinafter referred to as crosslinking agent (II)) and a graft-linking agent for polyalkyl acrylate (and/or methacrylate) rubber (hereinafter referred to as graft-linking agent (II)) set forth below. As examples of the alkyl acrylate and alkyl methacrylate, there may be mentioned alkyl acrylates such as methyl acrylate, ethyl acrylate, n-propyl acrylate, n-butyl acrylate, 2-ethylhexyl acrylate and alkyl methacrylates such as hexyl methacrylate, 2-ethylhexyl methacrylate or n-lauryl methacrylate. Preferably used among them is n-butyl acrylate.

Examples of the crosslinking agent (II) include ethylene glycol dimethacrylate, propylene glycol dimethacrylate, 1,3-butylene glycol dimethacrylate or 1,4-butylene glycol dimethacrylate.

The graft-linking agent (II) refers to a monomer having both a functional group which is to be polymerized together at the time of preparation of polyalkyl acrylate (and/or methacrylate) rubber by polymerization to be incorporated into the rubber structure and a functional group which is to remain unreacted at the time of preparation of the rubber by polymerization and react at the time of subsequent polymerization of monomer in the presence of rubber to graft a branch to the rubber. That is, a monomer having a plurality of polymerizable functional groups with different reactivities is referred.

As examples of the graft-linking agent (II), there may be mentioned allyl methacrylate, triallyl cyanurate or triallyl isocyanurate. Allyl methacrylate may be used also as the crosslinking agent (II). These crosslinking agents (II) and graft-linking agents (II) may be used each alone or in a combination of two or more thereof. The amounts of the crosslinking agent (II) and the graft-linking agent (II) used are respectively 0.1-10% by weight based on the polyalkyl acrylate (and/or methacrylate) rubber component. When allyl methacrylate is used for serving both as the crosslinking agent (II) and the graft-linking agent (II), it is used in an amount of 0.2-20% by weight.

The polyalkyl acrylate (and/or methacrylate) rubber component may be prepared by adding the above alkyl acrylate (and/or methacrylate), crosslinking agent (II) and graft-linking agent (II) to a latex of a polyorganosiloxane rubber component and polymerizing these monomers for polyalkyl acrylate (and/or methacrylate) rubber while the polyorganosiloxane rubber is at a state infiltrated with these monomers, whereby a compound rubber is formed with a structure wherein the polyorganosiloxane rubber component and the polyalkyl acrylate (and/or methacrylate) rubber component are tangled with each other, giving a latex of substantially unseparable compound rubber.

In practicing the present invention, those polyorganosiloxane based rubbers are preferably used in which the main skeleton of the polyorganosiloxane rubber component has repeating units of dimethylsiloxane and the main skeleton of the polyalkyl acrylate (and/or methacrylate) rubber component has repeating units of n-butyl acrylate.

The organosiloxane based rubbers thus prepared by means of emulsion polymerization are graft-polymerizable with vinyl monomers.

As examples of the vinyl monomer to be graft-polymerized, there may be referred to various vinyl monomers mentioned above, e.g., aromatic alkenyl compounds such as styrene, $\alpha$-methylstyrene or vinyltoluene; methacrylates such as methyl methacrylate, or 2-ethylhexyl methacrylate; acrylates such as methyl acrylate, ethyl acrylate or butyl acrylate; organic acids such as acrylic acid or methacrylic ; epoxy group-containing esters such as glycidyl methacrylate; and vinyl cyanide compounds such as acrylonitrile or methacrylonitrile. These monomers may be used each alone or in a combination of two or more thereof.

The proportion of the polyorganosiloxane based rubber and the vinyl monomer in the polyorganosiloxane based rubber graft copolymer is 30-95% by weight, preferably 40-90% by weight, of the polyorganosiloxane based rubber and 5-70% by weight, preferably 10-60% by weight, of the vinyl monomer based on the weight of the polyorganosiloxane based rubber graft copolymer.

The graft copolymer comprising rubber as the core may be separated and recovered by pouring a graft copolymer latex into water containing a metal salt such as calcium chloride or aluminum sulfate dissolved therein, followed by salting out and coagulation. The size of the coagulated particles of the graft copolymer comprising rubber as the core may be regulated by controlling the salting-out agent concentration and the coagulation temperature in the step of salting out and coagulation. As the salting-out agent concentration increases, the coagulated particle diameter decreases. With the increase in the coagulation temperature, the coagulated particle diameter decreases.

The microparticles of silica used in the present invention is a hydrophobic microparticles of silica which consists of silicon dioxide obtained by combustion hydrolysis or the aggregate thereof and has an average particle diameter of 0.001 μm to 1 μm and in which the number of silanol groups present on the surface of the microparticles of silica is 2 or less per 10 nm (100Å) square. After the graft copolymer comprising rubber as the core has been coagulated, the hydrophobic microparticles of silica are added thereto.

In the case where the average particle diameter of the microparticles of silica or their aggregates is greater than 1 μm, molded articles obtained, for example, from resin compositions containing the graft copolymer will exhibit a low impact resistance. The average particle diameter of the microparticles of silica or their aggregates is preferably 0.001 μm or more. When it is less than 0.001 μm, the microparticles tend to become difficult to handle.

The hydrophobic microparticles of silica can, by adhering to the graft copolymer comprising rubber as the core, prevent the tackiness of rubber and improve the powder characteristics of the polymer particles.

The microparticles of silica used in the present invention must be hydrophobic, and the density of silanol groups present on the surface of the microparticles must be 2 groups or less per 10 nm (100Å) square.

Such hydrophobic silica may be obtained, for example, by reacting microparticles silica obtained by combustion hydrolysis, in a state free from combined water, with dimethyldichlorosilane until the number of silanol groups present on the surface of the microparticles of silica becomes 2 or less.

The silanol group on the surface of the microparticles of silica can be quantitatively determined through the use of the reaction thereof with lithium aluminum hydride. Thus, the microparticles of silica is dried at a pressure of 2000 Pa (15 mmHg) or less and a temperature of 120°C for 3 hours, then reacted with lithium aluminum hydride, and the hydrogen generated through the reaction of the hydride with silanol groups is quantitatively determined, from which the quantity of silanol groups is estimated.

When more than two silanol groups per 10 nm (100Å) square are present on the surface of the microparticles of silica, the graft copolymer comprising, as the core, rubber containing such microparticles shows markedly poor powder characteristics such as blocking property.

The microparticles of silica is used in a range of 0.05-10 parts by weight, preferably 0.1-5 parts by weight, per 100 parts by weight of the graft copolymer comprising rubber as the core. In amounts of less than 0.05 part by weight, the powder characteristic improving effect is small. When the silica is used in an amount greater than 10 parts by weight, the properties of the resulting graft copolymer comprising rubber as the core are deteriorated. For example, the impact resistance of molded articles obtained from resin compositions using such a graft copolymer is lowered, owing to the microparticles added.

The present invention will be described in more detail below with reference to Examples and Comparative Examples.

In the Examples and Comparative Examples, "part" means part by weight unless otherwise stated.

The powder characteristics were estimated by the following methods.

Fluidity index

According to the method described in Chemical Engineering, Jan. 18, 1968, pp. 163-168, four kinds of values of angle of repose, compression degree, spatula angle and uniformity were measured, from which values respective marks were given according to a conversion table, and the fluidity was evaluated in terms of an index represented by the sum of these marks. The higher value of the index means a better fluidity.

Blocking property

The powder obtained was formed into a cylindrical block (5 cm in diameter and 3 cm in height) by application of a fixed load, then held in the mold at 30°C and 50°C for 3 hours and taken out of the mold. The block thus obtained was subjected to oscillation of 60Hz, and the time at which the weight of 1.00 mm (16 mesh)-pass powders in the resulting collapsed powders reached 60% of the weight of the original block was measured and designated as the blocking time. The shorter the blocking time, the better the fluidity of the powder.

Particle size distribution

Ten grams of the powder obtained was sampled and shaked on a shaking apparatus for 30 minutes by use of 1.00 mm (16 mesh), 0.595 mm (30 mesh), 0.250 mm (60 mesh), 0.149 mm (100 mesh) and 0.105 mm (mesh) sieves and the "on" portions of respective sieves were weighed, from which the particle size distribution was obtained.

Example 1

An aqueous emulsifier solution consisting of 195 parts of water and 2 parts of sodium oleate was prepared. Then, a mixture of 0.01 part of ferrous sulfate, 0.03 part of sodium ethylenediaminetetraacetate and 0.3 part of Rongalite® was dissolved in 5 parts of water, and the resulting solution was added to the emulsifier solution prepared above. To the resulting mixture was added a liquid mixture of 80 parts of butadiene, 20 parts of styrene, and 0.2 part of diisopropylbenzene hydroperoxide and polymerized at a reaction temperature of 55°C for 6 hours. The conversion to the rubber obtained was 97.6%.

The first stage graft polymerization was performed by dropwise adding to the rubber latex obtained a liquid mixture of 20 parts of methyl methacrylate and 0.2 part of cumene hydroperoxide at 65°C over a period of 1 hour and, after completion of the addition, keeping the same temperature for 30 minutes. Then, the second stage graft polymerization was performed by dropwise adding to the first stage reaction mixture a liquid mixture of 20 parts of styrene and 0.2 part of cumene hydroperoxide at 65°C over a period of 1 hour and, after completion of the addition, keeping the same temperature for 30 minutes. Further, the third stage graft polymerization was conducted by dropwise adding to the second stage reaction mixture a liquid mixture of 10 parts of methyl methacrylate and 0.1 part of cumene hydroperoxide at 65°C over a period of 30 minutes and, after completion of the addition, keeping the same temperature for 30 minutes.

The resulting latex was added to an aqueous calcium chloride solution of 5% concentration kept at 50°C so as to give a ratio of the latex to the aqueous solution of 1:2, then the mixture was heated up to 90°C to effect coagulation. After cooling, then separation by filtration and drying overnight at 80°C, a powdery graft copolymer comprising rubber as the core was obtained.

Determination of the particle size distribution of the copolymer powder showed that the percentages of 1.00 mm (16 mesh)-, 0.595 mm (30 mesh)-, 0.250 mm (60 mesh)-, 0.149 mm (100 mesh)-and 0.105 mm (150 mesh)-on portions were 2.4, 6.0, 34.2, 48.9 and 6.3%, respectively, and the percentage of 0.105 mm (150 mesh)-pass portion was 2.2%.

To the powder was added 0.5 part, per 100 parts of the powder, of a hydrophobic microparticles of silica (R-972, a trade name, mfd. by Nippon Aerosil Co., average particle diameter of aggregates: 0.020 μm, silanol group density: 1.2 groups per 10 nm (100Å) square) and mixed uniformly to obtain a powder of improved powder characteristics. The results of examination of the fluidity index and the blocking property of the powder are shown in Table 1.

Comparative Example 1

The graft copolymer powder comprising a polybutadiene based rubber as the core obtained in Example 1 was incorporated with 0.5 part, per 100 parts of the powder, of a microparticles of silica (Aerosil 200, a trade name, mfd. by Nippon Aerosil Co., average particle diameter of aggregates: 0.012 μm, silanol group density: 2.6 groups per 10 nm (100Å) square) and mixed uniformly. The results of examination of the fluidity index and the blocking property are shown in Table 1.

This Comparative Example corresponds to Example 3 described in JP-A-1-26663 and reveals that, in the case of graft copolymers comprising rubber as the core, the conventional microparticles of silica give only a small effect in improving powder characteristics.

Examples 2 and 3, Comparative Examples 2 and 3

Samples were prepared by adding to the graft copolymer powder comprising a polybutadiene based rubber as the core obtained in Example 1 a hydrophobic microparticles of silica (R-972, mfd. by Nippon Aerosil Co.) in an amount of 0.10 part and 2.0 parts, respectively, per 100 parts of the copolymer, and examined for the fluidity index and the blocking property (Example 2 and 3).

On the other hand, the graft copolymer comprising a polybutadiene based rubber as the core was as such examined for the fluidity index and the blocking property to obtain the results of Comparative Example 2. Further, 0.01 part of the hydrophobic microparticles of silica, R-972, was incorporated into 100 parts of the above copolymer, and the fluidity index and the blocking property of the resulting copolymer were determined to obtain the results of Comparative Example 3. These results reveal that when the hydrophobic microparticles of silica, R-972, is added in an amount of less than 0.05 part per 100 parts of the copolymer, it exhibits little of the powder characteristic improving effect.

Example 4

The coagulation conditions for the graft copolymer comprising rubber as the core obtained in Example 1 were altered; that is, 10% by weight, relative to the graft copolymer, of aluminum sulfate was used as the coagulating agent and the coagulation temperature was changed to 50°C, whereby coagulated particles were obtained in which the percentage of the 0.105 mm (150 mesh)-pass portion (100 μm or less) was 21.5%. The particle size distribution of the coagulated particles was as follows: the percentages of the 1.00 (16), 0.595 (30), 0.250 (60), 0.149 (100) and 0.105 mm (150 mesh)-on portions were 1.5, 2.5, 13.6, 27.4 and 33.9%, respectively.

The coagulated particles obtained above were incorporated with 0.50 part, per 100 parts of the particles, of a hydrophobic microparticles of silica, R-972, and examined for the fluidity index and the blocking property to obtain the results shown in Table 1. It can be seen that the power characteristic improving effect decreases with increase in the percentage of fine particles of 100 μm or less.

Table 1

|  | Fluidity index | Blocking property (sec) | |
|---|---|---|---|
|  |  | 30°C | 50°C |
| Example 1 | 86 | 0 | 0 |
| " 2 | 80 | 12 | 27 |
| " 3 | 88 | 0 | 0 |
| " 4 | 81 | 6 | 9 |
| Comparative Example 1 | 71 | 77 | 259 |
| " 2 | 68 | 89 | 328 |
| " 3 | 69 | 83 | 290 |

Example 5

One hundred parts of a siloxane mixture was obtained by mixing 2 pats of tetraethoxysilane, 0.5 part of γ-methacryloyloxypropyldimethoxymethylsilane and 97.5 parts of octamethylcycloterasiloxane. Then, 0.67 part each of dodecylbenzenesulfonic acid and sodium dodecylbenzenesulfonate were dissolved in 200 parts of distilled water, the resulting solution was added to the above-mentioned siloxane mixture, then preliminarily stirred at 10,000 rpm by means of a homomixer and thereafter emulsified at a pressure of 19.6 MPa (200 kg/cm$^2$) with a homogenizer to obtain an organosiloxane latex. The latex was transferred to a separable flask equipped with a condenser and a stirring blade, heated at 80°C for 5 hours while being mixed by stirring, then allowed to stand at room temperature and, after 48 hours, neutralized to a pH of 7.5 with an aqueous sodium hydroxide solution to stop the polymerization, whereby a polyorganosiloxane latex was obtained. The latex showed a conversion to polyorganosiloxane rubber of 88.6% and had a number average particle diameter of 0.22 μm. Thirty five parts of the polyorganosiloxane latex was placed in a separable flask equipped with a stirrer and 175 parts of distilled water was added thereto. The flask was flashed with nitrogen, then heated to 50°C, and a liquid mixture of 78.4 parts of n-butyl acrylate, 1.6 parts of allyl methacrylate and 0.3 part of tert-butyl hydroperoxide was added. Subsequently, a liquid mixture of 0.002 part of ferrous sulfate, 0.006 part of disodium ethylenediaminetetraacetate, 0.3 part of Rongalite® and 10 parts of distilled water was charged into the flask and the inner temperature was kept at 70°C for 2 hours to effect radical polymerization, whereby a compound rubber latex was obtained. To the compound rubber latex was dropwise added a liquid mixture of 10 parts of methyl methacrylate and 0.024 part of tert-butyl hydroperoxide over a period of 15 minutes, and the resulting mixture was kept at 60°C for 2 hours to effect graft polymerization to the compound rubber. The conversion of methyl methacrylate was 99.5% and the number average particle diameter of the graft polymer was 0.24 μm. The latex thus obtained was added to an aqueous calcium chloride solution of a concentration of 5% at 40°C so as to give a ratio of the latex to the aqueous solution of 1:2, and then heated up to 90°C to effect coagulation. After cooling, then separation by filtration and drying overnight at 80°C, a powdery polyorganosiloxane based rubber graft copolymer was obtained. Determination of the particle size distribution of the powder showed that the percentages of the 1.00 mm (16 mesh)-, 0.595 mm (30 mesh)-, 0.250 (60 mesh)-, 0.149 mm (100 mesh)- and 0.105 mm (150 mesh)-on portions were 1.8, 7.0, 45.8, 37.3 and 6.9%, respectively, and the percentage of the 0.105 mm (150 mesh)-pass portion was 1.2%.

The powder was incorporated with 0.5 part, per 100 parts of the powder, of a hydrophobic microparticles of silica (R-972, a trade name, mfd. by Nippon Aerosil Co., average particle diameter: 0.020 µm, silanol group density: 1.2 groups per 10 mm (100Å) square) and mixed uniformly to obtain a powder of improved powder characteristics. The results of examination of the fluidity index and the blocking property are shown in Table 2.

Comparative Example 4

The polyorganosiloxane based rubber graft copolymer powder obtained in Example 5 was incorporated with 0.5 part, per 100 parts of the powder, of microparticles of silica (Aerosil 200, a trade name, mfd. by Nippon Aerosil Co., average particle diameter: 0.012 µm, silanol group density: 2.6 groups per 10 nm (100 Å) square) and mixed uniformly. The results of examination of the fluidity index and the blocking property are shown in Table 2. The results reveal that in the case of polyorganosiloxane based rubber graft copolymers, the conventional microparticles of silica give little of the power characteristic improving effect.

Examples 6 and 7, Comparative Examples 5 and 6

Samples were prepared by adding to the polyorganosiloxane based rubber graft copolymer powder obtained in Example 5 hydrophobic microparticles of silica (R-972, mfd. by Nippon Aerosil Co.) in an amount of 0.10 part and 2.0 parts, respectively, per 100 parts of the copolymer powder and examined for the fluidity index and the blocking property (Examples 6 and 7). The results are shown in Table 2.

On the other hand, the polyorganosiloxane based rubber graft copolymer incorporated with no hydrophobic microparticles of silica was examined for the fluidity index and the blocking property to obtain the results of Comparative Example 5. Further, the graft copolymer was incorporated with 0.01 part, per 100 parts of the copolymer, of hydrophobic microparticles of silica, R-972, and examined for the fluidity index and the blocking property to obtain the results of Comparative Example 6. These results reveal that when the amount of the hydrophobic microparticles of silica R-972 added is less than 0.05 part per 100 parts, the powder characteristic improving effect obtainable is small.

Example 8

The coagulation conditions for the polyorganosiloxane based rubber graft copolymer obtained in Example 5 were altered to obtain coagulated particles in which the percentage of the 0.105 mm (150 mesh)-pass portion (100 µm or less) was 23.5%. That is, 10% by weight of aluminum sulfate relative to the graft copolymer was used as the coagulating agent and the coagulation temperature was changed to 30°C.

The particle size distribution of the coagulated particles was as follows: the percentages of the 1.00 (16), 0.595 (30), 0.250 (60), 0.149 (100) and 0.105 mm (150 mesh)-on portions were 1.1, 2.1, 15.2, 23.2 and 34.9%, respectively.

The coagulated particles obtained above were incorporated with 0.50 part, power 100 parts of the particles, of hydrophobic microparticles of silica, R-972, and examined for the fluidity index and the blocking property to obtain the results shown in Table 2. It can be seen that the powder characteristic improving effect decreases with increase in the percentage of microparticles of 100 µm or less.

Example 9

Two hundreds and three parts of the polyorganosiloxane latex prepared in Example 5 was placed in a separable flask equipped with a stirrer and 100 parts of distilled water was added thereto. The flask was flashed with nitrogen, then heated to 70°C, a liquid mixture of 0.002 part of ferrous sulfate, 0.006 part of disodium ethylenediaminetetraacetate, 0.3 part of Rongalite® and 10 parts of distilled water was placed therein, and further a liquid mixture of 30 parts of styrene, 10 parts of acrylonitrile and 0.3 part of tert-butyl hydroperoxide was added. Thereafter, the inner temperature was kept at 70°C for 2 hours to effect radical polymerization, whereby a polyorganosiloxane latex was obtained

The latex obtained above was added into an aqueous calcium chloride solution of a concentration of 5% at 40°C so as to give a ratio of the latex to the aqueous solution of 1:2, and then heated up to 90°C to effect coagulation. After cooling, then separation by filtration and drying overnight at 80°C, a powdery polyorganosiloxane graft copolymer was obtained. Determination of the particle size distribution of the powder showed that the percentages of the 1.00 mm (16 mesh)-, 0.595 mm (30 mesh)-, 0.250 mm (60 mesh)-, 0.149 mm (100 mesh)-, and 0.105 mm (150 mesh)-on portions were 2.4, 10.2, 31.6, 45.3 and 3.4%, respectively, and the percentage of the 0.105 mm (150 mesh)-pass portion was

EP 0 487 006 B1

7.1%.

The powder was incorporated with 0.5 part, per 100 parts of the powder of hydrophobic microparticles of silica (R-972, mfd. by Nippon Aerosil Co.) and mixed uniformly to obtain a powder of improved powder characteristics. The results of examination of the fluidity index and the blocking property are shown in Table 2.

The results reveal that the hydrophobic microparticles of silica (R-972, mfd. by Nippon Aerosil Co.) is effective in improving powder characteristics also for polyorganosiloxane rubber graft copolymers.

Table 2

|  | Fluidity index | Blocking property (sec) | |
|---|---|---|---|
|  |  | 30°C | 50°C |
| Example    5 | 83 | 0 | 0 |
| "              6 | 79 | 15 | 26 |
| "              7 | 86 | 0 | 0 |
| "              8 | 80 | 4 | 8 |
| "              9 | 81 | 2 | 7 |
| Comparative Example 4 | 71 | 68 | 265 |
| "              5 | 65 | 120 | 480 |
| "              6 | 69 | 112 | 390 |

## Claims

1. The use of hydrophobic microparticles of silica which consists of silicon dioxide obtained by combustion hydrolysis or the aggregate thereof and has an average particle diameter of 0.001 μm to 1 μm and in which the number of silanol groups present on the surface of the microparticles of silica is 2 or less per 10 nm square (100Å square) for improving the powder characteristics of a powder obtained by coagulation of a latex of a graft copolymer comprising rubber as the core by adding 0.05-10 parts by weight of said microparticles to 100 parts by weight of said powder.

2. The use according to claim 1, wherein the graft copolymer comprising rubber as the core is a polyorganosiloxane based graft copolymer obtained by graft-polymerizing at least one vinyl monomer to a polyorganosiloxane based rubber consisting of 1-100 % by weight of a polyorganosiloxane based rubber component and 99-0 % by weight of a polyalkyl acrylate and/or methacrylate component.

## Revendications

1. Utilisation de microparticules de silice hydrophobes consistant en du dioxyde de silicium obtenu par une hydrolyse par combustion, ou de leur agrégat, et ayant un diamètre particulaire moyen de 0,001 μm à 1 μm, le nombre de groupes silanol présents à la surface des microparticules de silice étant égal ou inférieur à 2 pour 10 nm carrés (100 Å carrés) pour améliorer les caractéristiques de poudre d'une poudre obtenue par coagulation d'un latex d'un copolymère greffé comprenant du caoutchouc comme noyau en ajoutant 0,05 à 10 parties en poids desdites microparticules à 100 parties en poids de ladite poudre.

2. Utilisation selon la revendication 1, dans laquelle le copolymère greffé comprenant du caoutchouc comme noyau est un copolymère greffé à base de polyorganosiloxane obtenu en polymérisant avec greffage au moins un monomère de vinyle à un caoutchouc à base de polyorganosiloxane constitué de 1 à 100% en poids d'un composant caoutchouc à base de polyorganosiloxane et de 99 à 0% en poids d'un composant acrylate de polyalkyle et/ou méthacrylate.

## Patentansprüche

1. Verwendung hydrophober Mikroteilchen aus Silica, welches aus durch Verbrennungshydrolyse erhaltenem Siliciumdioxid oder dem Aggregat hiervon besteht und einen durchschnittlichen Teilchendurchmesser von 0,001 μm bis 1 μm aufweist und worin die Anzahl von auf der Oberfläche der Mikroteilchen aus Silica vorliegenden Silanolgruppen 2 oder weniger pro 10 nm$^2$ (100 Å-Quadrat) beträgt, zur Verbesserung der Pulvereigenschaften eines durch Koagulation eines Latex eines Kautschuk als Kern umfassenden Pfropfcopolymeren erhaltenen Pulvers durch Zugabe von 0,05-10 Gew.-Teilen der Mikroteilchen zu 100 Gew.-Teilen des Pulvers.

2.  Verwendung nach Anspruch 1, wobei das Kautschuk als Kern umfassende Pfropfcopolymer ein Pfropfcopolymer auf Polyorganosiloxanbasis ist, erhalten durch Pfropfpolymerisieren mindestens eines Vinylmonomeren auf einen Kautschuk auf Polyorganosiloxanbasis, welcher aus 1-100 Gew.-% einer Kautschukkomponente auf Polyorganosiloxanbasis und 99-0 Gew.-% einer Polyalkylacrylat- und/oder -methacrylat-Komponente besteht.